# EUROPÄISCHE PATENTANMELDUNG

(11) **EP 1 289 357 A2**
(43) Veröffentlichungstag der Anmeldung: **05.03.2003**
(21) Anmeldenummer: 02015392.0
(22) Anmeldetag: 11.07.2002
(51) Int. Cl.: H05K 5/00

(54) **Elektronisches Gerät mit auswechselbarem Peripheriegeräte-Anschlussstecker**

(30) Priorität: 11.08.2001 DE 20113394 U
(71) Anmelder: Wincor Nixdorf International GmbH, 33106 Paderborn (DE)
(72) Erfinder: Baitz, Guenter, 13629 Berlin (DE); Sommer, Heinz, Dr., 14789 Wustewitz (DE)

(57) **Zusammenfassung**

Die Erfindung betrifft ein elektronisches Gerät mit einem auswechselbaren Peripheriegeräte-Anschlußstecker, wobei in das Gerät wahlweise wenigstens einer von mehreren jeweils einem anderen Schnittstellen-Standard genügender Peripheriegeräte-Anschlußstecker einsetzbar ist.

## Beschreibung

Die Erfindung betrifft ein elektronisches Gerät mit einem auswechselbaren Peripheriegeräte-Anschlußstecker.

Elektronische Geräte sind vielfach PC-basiert. Als wesentliche Baugruppe weisen sie eine häufig als Mother Board bezeichnete Basisleiterplatte auf, die zumindest einen Prozessor trägt. War früher ein für den Betrieb von Peripheriegeräten erforderlicher jeweils nur einem Standard genügender Schnittstellentreiber auf einem sogenannten AT-Erweiterungsboard angeordnet, so befinden sich heute verschiedenen Standards genügende Peripherietreiber auf der Basisleiterplatte.

Die elektrischen Anschlüsse der Peripherietreiber werden entweder über an einem Rand der Basisleiterplatte in einer Reihe angebrachte, nach hinten aus dem Gerätegehäuse ragende Peripheriegeräte-Anschlußstecker oder über irgendwo auf der Basisleiterplatte angeordnete Steckverbinder zur Verfügung gestellt. Im ersten Fall ist der Benutzer durch den Aufbau der Basisleiterplatte auf einen Standard festgelegt. Der Wechsel von einem auf einen anderen Schnittstellen-Standard ist entweder nicht möglich oder das Gerät erhält - wenn Peripheriegeräte-Anschlußstecker mehrerer Standards an der Basisleiterplatte angebracht werden- eine unakzeptable Breite.

Es ist deshalb bereits vorgeschlagen worden, Peripheriegeräte-Anschlußstecker außerhalb der einen Reihe in die Rückwand des Gerätegehäuses einzusetzen und diese über Verbindungsleitungen an die irgendwo auf der Basisleiterplatte angeordneten Steckverbinder anzuschließen. Dies führt zum einen zu einem Gewirr von Kabeln im Inneren des Gerätes und vergrößert zum anderen in unakzeptabler Weise die Höhe des Gerätes.

Der Erfindung liegt daher die Aufgabe zugrunde, eine Auswahl von Peripheriegeräte-Schnittstellen unterschiedlicher Standards anzubieten, ohne die Abmessungen des Gerätegehäuses zu vergrößern.

Die Aufgabe wird für ein PC-basiertes elektronisches Gerät nach dem Oberbegriff des Anspruchs 1 durch die kennzeichnenden Merkmale des Anspruchs 1 gelöst.

Entsprechend der Erfindung ist wahlweise wenigstens einer von mehreren, jeweils einem anderen Schnittstellen-Standard genügenden Peripheriegeräte-Anschlußsteckern in das Gerät einsetzbar. Dadurch ist das Gerät optimal an die verwendeten Peripheriegeräte anpaßbar und auf ohnehin nicht benötigte Peripheriegeräte-Anschlußstecker eines nicht verwendeten Standards kann verzichtet werden. Die verwendeten Peripheriegeräte-Anschlußstecker können z.B. dem IEEE RS 232-Standard oder dem USB-Standard genügen.

Vorzugsweise kommt eine Zusatzleiterplatte zum Einsatz, auf der wenigstens ein Peripheriegeräte-Anschlußstecker oder eine Mehrzahl von dem selben Schnittstellen-Standard genügenden Peripheriegeräte-Anschlußsteckern angeordnet ist. Es ist auch möglich, zugehörige Schnittstellentreiber oder zumindest Teile davon auf der Zusatzleiterplatte unterzubringen.

Entsprechend einer bevorzugten Ausbildung der Erfindung enthält das Gerät eine Basisleiterplatte, mit der die Zusatzleiterplatte mechanisch und elektrisch verbindbar oder verbunden ist, wobei an einem Rand der Basisleiterplatte eine Anschlußfeld-Blende mit wenigstens einem Durchbruch zumindest für den wenigstens einen Peripheriegeräte-Anschlußstecker angeordnet ist, und die Zusatzleiterplatte ist an einer Kante mit einer den wenigstens einen Peripheriegeräte-Anschlußstecker tragenden Anschlußblende versehen. Der Durchbruch ist dabei derart bemessen, daß die Zusatzleiterplatte mit ihrer der einen Kante gegenüberliegenden Kante voran von außen in den Durchbruch einschiebbar ist, bis die Anschlußblende der Zusatzleiterplatte an der Anschlußfeld-Blende anliegt und die Anschlußblende die Ränder des Durchbruchs wenigstens teilweise überdeckt. Der bzw. die Peripheriegeräte-Anschlußstecker und die Anschlußfeld-Blende bilden dadurch eine Einheit.

Entsprechend einer alternativen Ausbildung der Erfindung liegt die Zusatzleiterplatte auf der Geräte-Innenseite an der Anschlußfeld-Blende an und ist der Durchbruch ist derart bemessen, daß der wenigstens eine Peripheriegeräte-Anschlußstecker mit einem komplementären Stecker durch den Durchbruch von außen her erreichbar ist. Ein den wenigstens einen Peripheriegeräte-Anschlußstecker freilassendes Abdeckblech ist dabei von außen derart an der Anschlußfeld-Blende befestigt, daß es die Ränder des Durchbruchs wenigstens teilweise überdeckt.

In Fortbildung der Erfindung ist die Basisleiterplatte in einem an den Durchbruch grenzenden Bereich mit einem Ausschnitt wenigstens von der Größe der Zusatzleiterplatte versehen. Eine mit nach oben weisender Anschlußblende in den Durchbruch der Anschlußfeld-Blende eingeschobene Zusatzleiterplatte kommt in dem Durchbruch zu liegen. Ein auf der Zusatzleiterplatte angeordneter Peripheriegeräte-Anschlußstecker befindet sich dann auf der gleichen Höhe über der Basisleiterplatte wie andere, auf letzterer angeordnete Stecker. Vorzugsweise trägt die Basisleiterplatte dabei einen ersten und die Zusatzleiterplatte einen zweiten Steckverbinder, und der erste Steckverbinder ist mit dem zweiten Steckverbinder über eine sehr kurz gehaltene vieladrige elektrische Verbindung, insbesondere ein Flachbandkabel verbunden.

Entsprechend einer alternativen Ausführung trägt die Basisleiterplatte einen dritten Steckverbinder und die Zusatzleiterplatte einen dazu komplementären Gegensteckverbinder, auf den die Zusatzleiterplatte direkt aufsteckbar ist. Dazu wird die Zusatzleiterplatte mit nach unten weisender Anschlußblende in den Durchbruch der Anschlußfeld-Blende eingeschoben.

Weitere Merkmale und Vorteile der Erfindung ergeben sich aus der folgenden Beschreibung, welche in Verbindung mit den beigefügten Zeichnungen die Erfindung an Hand eines Ausführungsbeispiels erläutert. Es zeigt
- Fig. 1: ein erstes Ausführungsbeispiel einer Basisleiterplatte zusammen mit einer Zusatzleiterplatte in perspektivischer Draufsicht,
- Fig. 2: die Basisleiterplatte aus Fig. 1 in einer anderen Perspektive,
- Fig. 3: ein erstes Ausführungsbeispiel einer Zusatzleiterplatte in perspektivischer Draufsicht,
- Fig. 4: ein zweites Ausführungsbeispiel einer Zusatzleiterplatte in perspektivischer Draufsicht,
- Fig. 5: ein zweites Ausführungsbeispiel einer Basisleiterplatte zusammen mit einer Zusatzleiterplatte in perspektivischer Draufsicht.

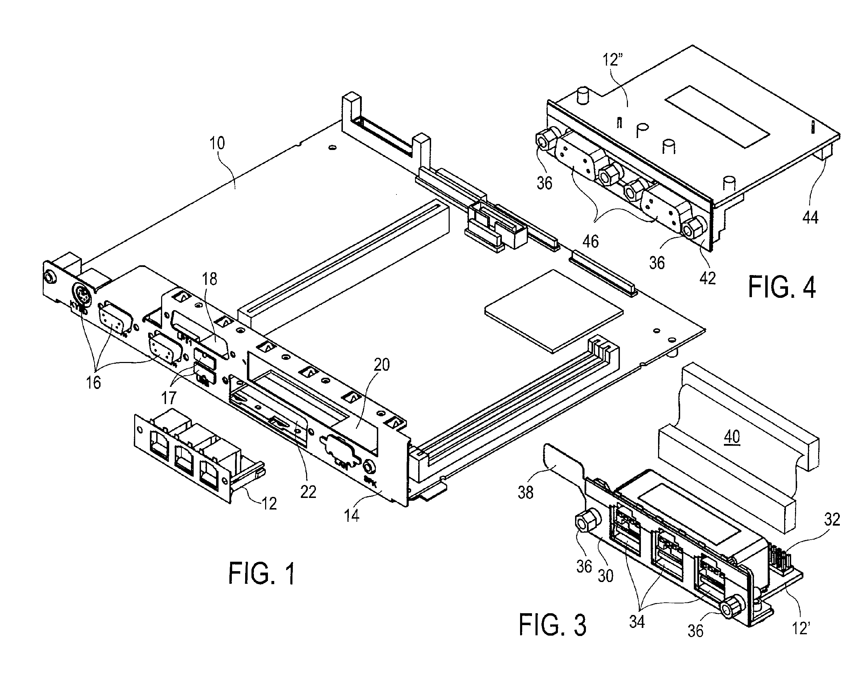

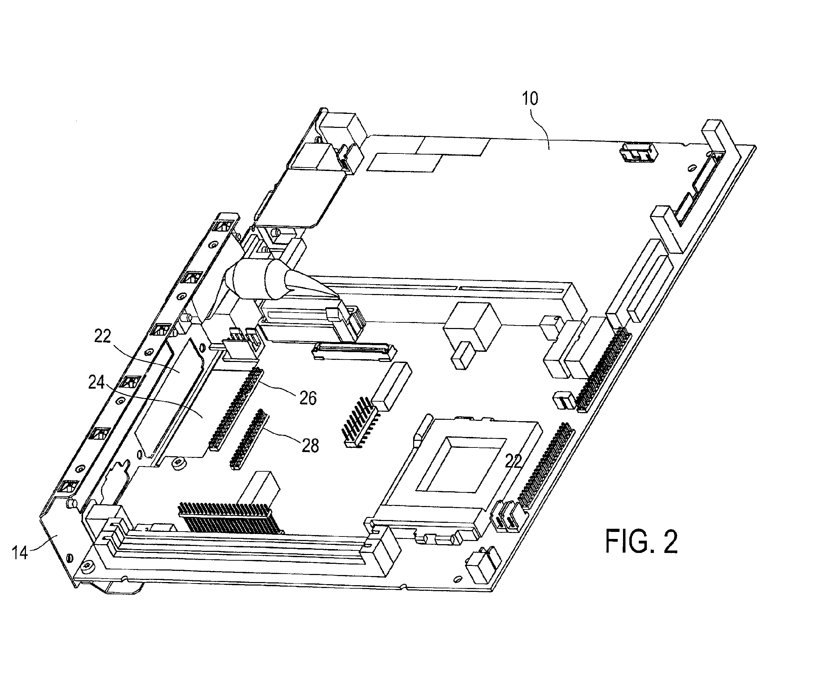

Die Figuren 1 und 2 zeigen ein erstes Ausführungsbeispiel einer Basisleiterplatte 10 eines ansonsten nicht dargestellten elektronischen Gerätes zusammen mit einer Zusatzleiterplatte 12 (Fig. 1) in unterschiedlichen perspektivischen Ansichten. An einem Rand der Basisleiterplatte 10 ist eine Anschlußfeld-Blende 14 befestigt, durch die verschiedene, an der Basisleiterplatte 10 befestigte und für den Anschluß anderer Geräte bestimmte Stecker 16 hindurchragen. Des Weiteren sind in die Anschlußfeld-Blende 14 zwei Steckbuchsen 17 nach dem USB-Standard eingebaut, die elektrisch mit der Basisleiterplatte 10 verbunden sind. Ferner trägt die Anschlußfeld-Blende 14 eine erste Ausnehmung 18 für den Einbau eines Drucker-Anschlußsteckers und eine weitere Ausnehmung 20 für die Anschlußblende eines nicht dargestellten AT-Erweiterungsboards. Erfindungswesentlich ist vor allem der in die Anschlußfeld-Blende 14 eingebrachte Durchbruch 22. Die Basisleiterplatte ist mit einem ersten Steckverbinder 26 und nahe dem zur Anschlußfeld-Blende 14 parallelen Rand des Durchbruchs 22 mit einem weiteren Steckverbinder 28 bestückt.

Wie in Fig. 2 deutlich zu erkennen ist die Basisleiterplatte 10 in einem an den Durchbruch 22 grenzenden Bereich mit einem Ausschnitt 24 von wenigstens einer solchen Größe versehen, daß die Zusatzleiterplatte 12 darin Platz findet.

In Fig. 3 ist ein erstes Ausführungsbeispiel einer Zusatzleiterplatte mit 12' bezeichnet. Diese trägt an ihrem einen Rand eine erste Anschlußblende 30 und an ihrem dem einen Rand gegenüberliegenden anderen Rand einen zweiten Steckverbinder 32. In die erste Anschlußblende 30 sind drei sogenannte USB-Powersteckbuchsen 34 eingebaut, die elektrisch mit der ersten Zusatzleiterplatte 12' verbunden sind. Die USB-Powersteckbuchsen 34 tragen diese Bezeichnung, weil sie zusätzlich zu den auch in den USB-Steckbuchsen 17 vorhandenen Datenkontakten mit Kontakten zur übertragung von Versorgungsspannungen zu einem anzuschließenden Perpheriegerät ausgestattet sind.

Zur Montage wird die erste Zusatzleiterplatte 12' mit dem zweiten Steckverbinder 32 voran von außen durch den Durchbruch 22 hindurch geschoben, wie dies in Fig. 1 beispielhaft für die Zusatzleiterplatte 12 gezeigt ist. Schließlich kommt die erste Anschlußblende 30 an der Anschlußfeld-Blende 14 zur Anlage. In dieser Position wird sie mit Hilfe zweier Schraubbolzen 36 mit der Anschlußfeld-Blende 14 verschraubt. An der Anschlußblende 30 ist seitlich eine Fahne 38 angebracht, die die USB-Steckbuchsen 17 überdeckt, so daß diese nicht mehr benutzbar sind. Die erste Zusatzleiterplatte 12' wird mit der Basisleiterplatte 10 über ein Flachbandkabel 40 verbunden, dessen eines Ende auf den ersten Steckverbinder 26 und dessen anderes Ende auf den zweiten Steckverbinder 32 aufgesteckt wird.

In Fig. 4 ist ein zweites Ausführungsbeispiel einer Zusatzleiterplatte mit 12" bezeichnet. Diese trägt an ihrem einen Rand eine zweite Anschlußblende 42 und an ihrem dem einen Rand gegenüberliegenden anderen Rand einen zu dem weiteren Steckverbinder 28 komplementären Gegensteckverbinder 44. In die zweite Anschlußblende 42 sind zwei dem IEEE RS 232-Standard genügende Steckbuchsen 46 eingebaut, die elektrisch mit der zweiten Zusatzleiterplatte 12" verbunden sind.

Zur Montage wird die zweite Zusatzleiterplatte 12" mit dem Gegensteckverbinder 44 voran von außen durch den Durchbruch 22 in der Anschlußfeld-Blende 14 hindurch geschoben, wie dies in Fig. 1 für die Zusatzleiterplatte 12 beispielhaft gezeigt ist. Schließlich kommt die zweite Anschlußblende 42 an der Anschlußfeld-Blende 14 zur Anlage. Die zweite Zusatzleiterplatte 12" wird mit der Basisleiterplatte 10 verbunden, indem der Gegensteckverbinder 44 auf den weiteren Steckverbinder 28 aufgesteckt wird. Anschließend wird die zweite Zusatzleiterplatte 12" mit Hilfe zweier Schraubbolzen 36 mit der Anschlußfeld-Blende 14 verschraubt.

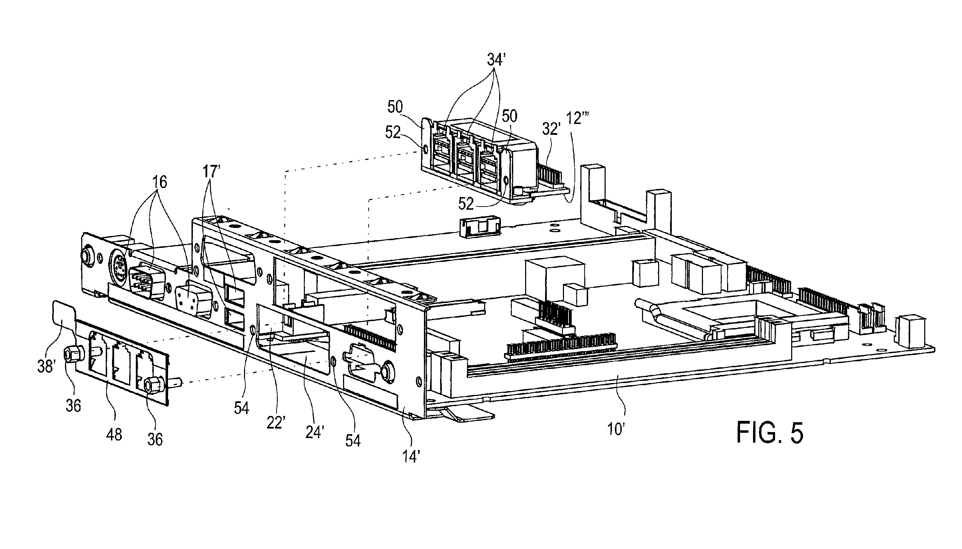

Fig. 5 zeigt in einem zweiten Ausführungsbeispiel eine andere Basisleiterplatte 10' eines ansonsten nicht dargestellten elektronischen Gerätes zusammen mit einer anderen Zusatzleiterplatte 12'''. An einem Rand der anderen Basisleiterplatte 10' ist eine Anschlußfeld-Blende 14' befestigt, durch die verschiedene, an der anderen Basisleiterplatte 10' befestigte und für den Anschluß anderer Geräte bestimmte Stecker 16 hindurchragen. Des Weiteren sind in die Anschlußfeld-Blende 14' Ausnehmungen 17' für zwei Steckbuchsen nach dem USB-Standard eingebracht. Ferner trägt die Anschlußfeld-Blende 14' verschiedene Ausnehmungen für den Einbau eines Drucker-Anschlußsteckers und die Anschlußblende eines nicht dargestellten AT-Erweiterungsboards. Erfindungswesentlich ist vor allem der in die Anschlußfeld-Blende 14' eingebrachte Durchbruch 22'. Die andere Basisleiterplatte 10' ist in einem an den Durchbruch 22' grenzenden Bereich mit einem Ausschnitt 24' von wenigstens einer solchen Größe versehen, daß die andere Zusatzleiterplatte 12''' darin Platz findet.

Die andere Zusatzleiterplatte 12''' ist an einer Kante mit drei USB-Powersteckbuchsen 34' versehen, die elektrisch mit der anderen Zusatzleiterplatte 12''' verbunden sind. Letztere trägt an ihrem der einen Kante gegenüberliegenden Rand einen vierten Steckverbinder 32'. Zu beiden Seiten der USB-Powersteckbuchsen 34' ist auf der anderen Zusatzleiterplatte 12''' ein Befestigungswinkel 50 mit einem Gewindeloch 52 befestigt. Des Weiteren ist ein jeweils die USB-Powersteckbuchsen 34' freilassendes Abdeckblech 48 vorgesehen.

Die andere Zusatzleiterplatte 12''' wird zur Montage so hinter der Anschlußfeld-Blende 14' positioniert, das die Gewindelöcher 52 mit seitlich in der Anschlußfeld-Blende 14' neben dem Durchbruch 22' angeordneten Bohrungen 54 fluchten. Das Abdeckblech 48 wird außen derart auf der Anschlußfeld-Blende 14' positioniert, daß es die Ränder des Durchbruchs 22' wenigstens teilweise überdeckt. In dieser Position wird es mit Hilfe zweier durch die Bohrungen 54 in der Anschlußfeld-Blende 14' hindurchgesteckter Schraubbolzen 36 mit der Anschlußfeld-Blende 14' und der anderen Zusatzleiterplatte 12''' verschraubt. An dem Abdeckblech 48 ist seitlich eine Fahne 38' angebracht, die in die Ausnehmungen 17' eingebaute USB-Steckbuchsen überdeckt, so daß diese nicht mehr benutzbar sind. Die andere Zusatzleiterplatte 12''' wird mit der Basisleiterplatte 10 über ein Flachbandkabel 40 verbunden, wie dies bereits für die erste Zusatzleiterplatte 12' beschrieben ist.

Selbstverständlich kann eine zur Montage auf der Innenseite der Anschlußfeld-Blende 14' ausgebildete Zusatzleiterplatte auch entsprechend der in Fig. 4 dargestellten Zusatzleiterplatte 12" ausgebildet sein.

## Patentansprüche

1. PC-basiertes elektronisches Gerät mit einer Basisleiterplatte (10, 10') und wenigstens einer Peripheriegeräte-Schnittstelle, **dadurch gekennzeichnet ,daß** wahlweise wenigstens einer von mehreren, jeweils einem anderen Schnittstellen-Standard genügenden Peripheriegeräte-Anschlußsteckern (34, 34', 46) in das Gerät einsetzbar ist.

2. Elektronisches Gerät nach Anspruch 1, deren Peripheriegeräte-Anschlußstecker (46) dem IEEE RS 232-Standard genügt.

3. Elektronisches Gerät nach Anspruch 1, deren Peripheriegeräte-Anschlußstecker (34, 34') dem USB-Standard genügt.

4. Elektronisches Gerät nach einem der Ansprüche 1 bis 3 mit einer Zusatzleiterplatte (12; 12', 12", 12'''), auf der wenigstens ein Peripheriegeräte-Anschlußstecker (34, 34', 46) oder eine Mehrzahl von dem selben Schnittstellen-Standard genügenden Peripheriegeräte-Anschlußsteckern (34, 34', 46) oder auch zusätzlich wenigstens ein Schnittstellentreiber oder Teile davon angeordnet ist.

5. Elektronisches Gerät nach Anspruch 4, bei der die Zusatzleiterplatte (12; 12', 12", 12''') mit der Basisleiterplatte (10, 10') mechanisch und elektrisch verbindbar oder verbunden ist, wobzu an einem Rand der Basisleiterplatte (10, 10') eine Anschlußfeld-Blende (14, 14') mit wenigstens einem Durchbruch (22, 22') zumindest für den wenigstens einen Peripheriegeräte-Anschlußstecker 34, 34', 46) angeordnet ist.

6. Elektronisches Gerät nach Anspruch 5, bei der die Zusatzleiterplatte (12; 12', 12") an einer Kante mit einer den wenigstens einen Peripheriegeräte-Anschlußstecker (34, 46) tragenden Anschlußblende (30, 42) versehen ist und
der Durchbruch (22) derart bemessen ist, daß die Zusatzleiterplatte (12; 12', 12") mit ihrer der einen Kante gegenüberliegenden Kante voran von außen in den Durchbruch (22) einschiebbar ist, bis die Anschlußblende (30, 42) der Zusatzleiterplatte (12; 12', 12") außen an der Anschlußfeld-Blende (14) anliegt und die Anschlußblende (34, 46) die Ränder des Durchbruchs (22) wenigstens teilweise überdeckt.

7. Elektronisches Gerät nach Anspruch 5, bei der die Zusatzleiterplatte (12''') an einer Kante mit wenigstens einem Peripheriegeräte-Anschlußstecker (34') versehen ist,
der Durchbruch (22') derart bemessen ist, daß bei auf der Geräte-Innenseite an der Anschlußfeld-Blende (14') anliegender Zusatzleiterplatte (12''') der wenigstens eine Peripheriegeräte-Anschlußstecker (34') mit einem komplementären Stecker durch den Durchbruch (22') von außen her erreichbar ist, und
ein den wenigstens einen Peripheriegeräte-Anschlußstecker (34') freilassendes Abdeckblech (48) vorgesehen ist, das von außen derart an der Anschlußfeld-Blende (14') befestigt ist, daß es die Ränder des Durchbruchs (22') wenigstens teilweise überdeckt.

8. Elektronisches Gerät nach einem der Ansprüche 5 bis 7, bei dem das Abdeckblech (48) oder die Anschlußblende (30) der Zusatzleiterplatte (12', 12''') mit einer Fahne (38, 38') versehen ist, dazu bestimmt ist, die zumindest eine in die Anschlußfeld-Blende (14, 14') sonst noch eingebaute Steckbuchse (17) zu überdecken.

9. Elektronisches Gerät nach einem der Ansprüche 5 bis 8, deren Basisleiterplatte (10, 10') in einem an den Durchbruch (22, 22') grenzenden Bereich mit einem Ausschnitt (24) wenigstens von der Größe der Zusatzleiterplatte (12', 12''') versehen ist.

10. Elektronisches Gerät nach einem der Ansprüche 5 bis 9, bei dem die Basisleiterplatte (10) einen ersten Steckverbinder (26) und die Zusatzleiterplatte (12') einen zweiten Steckverbinder (32) trägt und der erste Steckverbinder (26) mit dem zweiten Steckverbinder (32) über eine vieladrige elektrische Verbindung, insbesondere ein Flachbandkabel (40) verbunden ist oder wird.

11. Elektronisches Gerät nach einem der Ansprüche 5 bis 9, bei dem die Basisleiterplatte (10) einen dritten Steckverbinder (28) und die Zusatzleiterplatte (12") einen dazu komplementären Gegensteckverbinder (44) trägt, auf den die Zusatzleiterplatte (12") direkt aufsteckbar ist.
